# EUROPÄISCHE PATENTSCHRIFT

(11) **EP 1 233 892 B1**
(45) Veröffentlichungstag und Bekanntmachung des Hinweises auf die Patenterteilung: **02.06.2004**
(21) Anmeldenummer: 00990632.2
(22) Anmeldetag: 01.12.2000
(51) Int. Cl.: B60T 7/04

(54) **PEDALEINRICHTUNG FÜR EIN KRAFTFAHRZEUG MIT EINEM WEGAUFNEHMENDEN SENSOR**
PEDAL SYSTEM FOR A MOTOR VEHICLE COMPRISING A DISPLACEMENT SENSOR
SYSTEME DE PEDALE POUR AUTOMOBILE, MUNI D'UN CAPTEUR DE DEPLACEMENT

(30) Priorität: 03.12.1999 DE 19958241
(43) Veröffentlichungstag der Anmeldung: 28.08.2002
(73) Patentinhaber: Methode Electronics Malta Ltd., Mriehel QRM 09 (MT)
(72) Erfinder: Slanec, Konrad, St. Julians STJ 08 (MT); Sammut, Gilbert, San Gwann SAN 04 (MT); Joslin, Gregory, Birkirkara BKR 07 (MT); Neumann-Henneberg, Uwe, Sliema SLM 03 (MT)
(74) Vertreter: von Puttkamer, Nikolaus, Dipl.-Ing.
(86) Internationale Anmeldenummer: PCT/EP2000/012104
(87) Internationale Veröffentlichungsnummer: WO 2001/040039

(56) Entgegenhaltungen:
- EP-A- 0 337 939
- DE-A- 3 242 537
- DE-A- 4 318 263
- US-A- 4 327 414

## Beschreibung

Die Erfindung bezieht sich auf eine Pedaleinrichtung für Kraftfahrzeuge mit zumindest einem Fußhebel und einem den Weg des Fußhebels aufnehmenden analogen Sensor.

Es ist üblich, verschiedene Pedalstellungen mittels Endschaltern in groben Schritten zu ermitteln.

Durch die US 4327414 A ist eine Meßeinrichtung zum digitalen Ermitteln des Drehwinkels eines Bremspedals bekannt geworden, bei der eine Winkelskala durch elektromagnetisch detektierbare radial abstehende Zähne eines mit dem Pedal verbundenen Meßsegments gebildet wird. Zwei induktiv sensible Spulen sind zur.Pedalachse hin auf die quer zur Spulenachse stirnseitig vorbei schwenkenden Zähne gerichtet und detektieren deren An- bzw. Abwesenheit. Um gleichbleibende Zählimpulse zu ermöglichen, muß das Zahnsegment zur Pedalachse genau konzentrisch angeordnet sein. Die Spulenachse muß beim Einbau genau auf das Zahnsegment ausgerichtet werden. Zur Unterscheidung der Drehrichtung werden zwei Spulen benotigt.

Ferner ist durch die DE 4318263 ein induktiver wegaufnehmender Sensor bekannt geworden, bei dem ein mit einem beweglichen Teil verbundener ferromagnetischer Stab in eine Meßspule hinein schiebbar ist und deren Inuktivität analog zum Verschiebeweg verändert. Da hier die Bewegungsfreiheit des Stabs stark beengt ist, eignet sich ein solcher Sensor nur für linear bewegliche Teile, wobei auf eine genaue Ausrichtung geachtet werden muß.

Ferner ist durch die EP 0337939 A eine induktive hochsensitive Sensoreinrichtung mit Sender- und Empfängerspulen bekannt, durch die Objektunregelmäßigkeiten (Unebenheiten, Spalte in einem Probekörper) in einem engen Nahbereich deutlich erfasst werden können. Ein solcher Sensor erfordert wegen seiner engen Fokussierung genaue Lagebeziehungen. Er eignet sich nicht zur Erfassung von weiter entfernten Teilen und insbesondere nicht zur feinstufigen Erfassung von deren Abstandsänderungen.

Ferner ist es z.B. durch die DE 3612904 A bekannt, den Sensor als die Winkelstellung des Fußhebels stufenlos detektierendes Drehpotentiometer auszubilden. Bei einem solchen Sensor ist es üblich, daß dessen drehbare Teile mit einer Schwenkachse des Pedals und in schleifender Verbindung mit einem stationären Sensorteil stehen. Die ermittelten Sensorwerte können dazu dienen, die Regelung der Antriebs- und Bremssysteme des Automobils zu verbessern. Ein derartiger Sensor ist externen Störeinflüssen, insbesondere von .metallischen Fremdpartikeln ausgesetzt und unterliegt einem hohen Verschleiß, was zu einer Verfälschung der Ausgangssignale führt.

Der Erfindung liegt die Aufgabe zugrunde, mit geringem Herstellungsaufwand eine störunanfällige Einrichtung von hoher Empfindlichkeit zu schaffen.

Diese Aufgabe wird durch Erfindung gemäß Anspruch 1 gelöst. Der berührungsfrei arbeitende analoge Sensor benötigt nur ein elektrisch aktives Teil, daß ortsfest und unabhängig von den Konstruktionsteilen des Pedals und der Pedalaufhängung in den Pedalraum eingebaut und elektrisch angeschlossen werden kann. Das mit dem Fußhebel verbundene Metallteil bildet zusammen mit diesem ein Bauteil und bedarf somit keines zusätzlichen Montageaufwands. Da es außerhalb der Pedalachse angeordnet ist, wird der Einbau des Fußhebels nicht behindert. Der veränderliche freie Tastabstand zwischen den beiden Sensorteilen schlägt sich in einer analogen Änderung der Stromaufnahme nieder, die sich unmittelbar mit geringem Aufwand messen lässt.

Ein besonderer Vorteil des Sensors besteht in seiner Unanfälligkeit gegen Verschmutzung und in seiner zeitlich nahezu unbegrenzten Funktionsfähigkeit. Im Gegensatz z.B. zu einem magnetisch wirkenden Hall-Sensor werden beim mit hochfrequenten Wechselfeldern arbeitenden induktiven Sensor in den Sensorraum keine Eisenpartikel hineingezogen, die die Sensorcharakteristik stark verändern würden. Die Sensorteile detektieren unmittelbarer das direkt vom Fuß des Fahrers betätigte Bedienorgan. Dadurch kann das Betätigungsverhalten unmittelbar und unverfälscht erfaßt und ausgewertet werden.

Vorteilhafte Weiterbildungen der Erfindung ergeben sich aus den in den Ansprüchen 2 bis 11 gekennzeichneten Merkmalen.

Das Metallteil nach Anspruch 2 ist gegenüber einem magnetisch neutralen Material besser detektierbar.

Die Einrichtung nach Anspruch 3 läßt sich montagetechnisch günstig realisieren.

Der z.B. ferromagnetische Fußhebel nach Anspruch 4 kann so gestaltet sein, daß das Metallteil als spezielle einstückige Ausformung eines Hebelbereichs kostengünstig ausgebildet ist.

Der Fußhebel nach Anspruch 5 verbessert die elektromagnetische Empfindlichkeit des Sensors, wobei insbesondere die Lage und Gestalt des Metallteils optimal an die Sensoreigenschaften angepaßt werden kann.

Der z.B. gießtechnisch herstellbare Fußhebel nach Anspruch 6 läßt sich bei hoher Bruchsicherheit besonders gut an die Lage und Funktionsform des Metallteils anpassen, das im Pedalkörper z.B. durch partielles Umspritzen formschlüssig fixiert werden kann.

Durch die Kontur nach Anspruch 7 kann das Ausgangssignal des Sensors in Abhängigkeit von der Pedalstellung über einen weiten Verstellbereich zumindest annähernd linearisiert werden, sodaß die Sensorempfindlichkeit über den gesamten Bereich annähernd gleich bleibt. Eine solche durch eine abgestimmte Kontur erzielte Linearisierung wäre z.B. mittels einer einfachen elektrischen Regelung nicht erreichbar. Die Kontur kann z.B. annähernd geradlinig verlaufen und in ihrer Orientierung auf die elektromagnetischen Eigenschaften des Sensors abgestimmt sein. Z.B. bei anderen Einbauverhältnissen kann es von Vorteil sein, wenn das Metallteil spiralförmig gekrümmt verläuft. Durch die Anordnung des Sensors auf der dem Bedienteil des Fußhebels gegenüberliegenden Oberseite verringert sich im Sensorbereich die Verschmutzungsgefahr z.B. durch kontaminiertes Schuhwerk.

Die Umsetzeinrichtung nach Anspruch 8 kann in engem Abstand über kurze Leitungen direkt mit dem Spulenteil verbunden sein. Ohne zwischengeschaltete Kontaktteile und bei geringer Störungsgefahr wird eine hohe Übertragungssicherheit erreicht.

Durch das Trägerteil nach Anspruch 9 wird eine feste Zuordnung und genaue elektrische Abstimmung zwischen dem Spulenteil und der Umsetzeinrichtung möglich.

Die Doppelspule nach den Ansprüchen 10 und 11 erhöht die Redundanz des Sensorsystems, indem auch bei einer Störung an einer Spule die Funktionsfähigkeit erhalten bleibt. Durch den ständigen Vergleich der Meßwerte beider Spulenteile lassen sich Störungen in einem Sensor schnell erkennen. Die Gegenläufigkeit der beiden Metallteile bedeutet, daß sich diese wechselweise dem den Spulenteilen nähern bzw. von diesen entfernen. Dies ergibt eine besonders deutliche, gut auszuwertende Änderung eines Summen- oder Differenzsignals.

Ein Ausführungsbeispiel der Erfindung ist in der Zeichnung dargestellt und wird im folgenden näher erläutert. Es zeigen:
- Figur 1: schematisiert eine partielle Seitenansicht einer Pedaleinrichtung eines Automobils in einer Ausgangsstellung,
- Figur 2: die Teile nach Figur 1 in einer anderen Funktionsstellung,
- Figur 3: ein Seitenansicht einer abgewandelte Pedaleinrichtung.

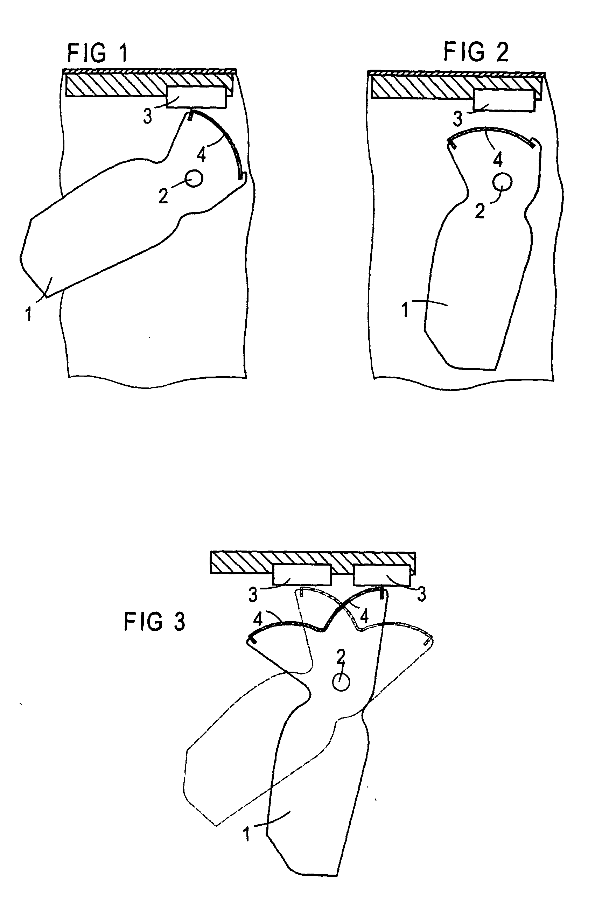

Nach Figur 1 ist ein Fußhebel 1 um eine Pedalachse 2 schwenkbar in einem Pedalraum eines Automobils gelagert. Oberhalb des Fußhebels 1 befindet sich ein stationär angebrachtes Spulenteil 3, das ein zum Fußhebel 1 hin gerichtetes elektromagnetisches Wechselfeld induziert. Am z.B. aus glasfaserverstärktem Kunststoff bestehenden Fußhebel 1 ist ein aus ferromagnetischem Material bestehendes Metallteil 4 angesetzt, das zusammen mit dem Spulenteil einen induktiven Sensor bildet und dessen Abstand zur Spule sich in Abhängigkeit von der Schwenkstellung des Fußhebels 1 ändert. Dies bewirkt eine entsprechende Änderung des induktiven Widerstand des Spulenteils 3, was zu einer entsprechenden Änderung der meßbaren Verlustleistung des Spulenteils 3 führt. Das aus Blech gebogene Metallteil 4 weist eine konvexe nockenartige Krümmung auf, deren Verlauf so gestaltet ist, daß sich die Ausgangssignale des Sensors annähernd proportional zu Winkelstellung des Fußhebels 1 verändern.

Das Metallteil weist eine einfach zu erzeugende Biegekontur auf und kann mit geringem Aufwand durch Einlegen in eine Gießform für den Fußhebel mit diesem verbunden werden. Dieses Teil des Sensors verursacht daher beim weiteren Einbau in den Pedalraum keinerlei zusätzliche Kosten. Das Spulenteil 3 kann unabhängig von der Montage des Fußhebels ohne wechselseitige Behinderung in den Pedalraum eingebaut werden.

In der gezeigten Ausgangsstellung ist ein Ende des Metallteils dem Spulenteil eng benachbart und beeinflußt dessen elektromagnetisches Wechselfeld entsprechend stark.

Nach Figur 2 ist der Fußhebel in eine Funktionsstellung geschwenkt, in der der Abstand zum Spulenteil 3 erheblich vergrößert ist. Der induktive Widerstand des Spulenteils hat sich entsprechend geändert. In einer nicht dargestellten, unmittelbar angekoppelten Umsetzeinrichtung können die Sensorwerte in Ausgangssignale umgewandelt werden und in einer elektronischen Einrichtung verarbeitet werden.

Nach Figur 3 weist der Sensor zwei einander benachbarte Spulenteile 3 auf, denen am Fußhebel 1 zwei Metallteile von entgegengesetzter Neigung kipphebelartig gegenüberstehen. Die beiden Metallteile sind hier an den einander zugewandten Endabschnitten im gemeinsamen Mittelbereich einstückig miteinander zu einem schmetterlingsartigen Sensorteil verbunden, was den Herstellungsaufwand verringert. Die Metallteile sind gegenüber der Pedalachse 2 exzentrisch so geformt, daß sie sich wechselweise dem jeweiligen Spulenteil 3 nähern bzw. von diesem entfernen. Dies bewirkt eine besonders starke Änderung des Differenzsignals zwischen den beiden Spulenteilen 3.

In der strichpunktiert angedeuteten Ausgangsstellung ist eines der Metallteile 4 einem der Spulenteile 3 eng angenähert, während das andere Metallteil 4 sich in der am weitesten vom Spulenteil 3 entfernten Stellung befindet. In volllinig dargestellten Endstellung des Fußhebels 1 haben sich die Abstände der Metallteile von ihren Spulenteilen 3 umgekehrt.

## Patentansprüche

1. Pedaleinrichtung für Kraftfahrzeuge mit einem Fußhebel (1 und einem den Weg des Fußhebels (1) aufnehmenden Sensor,
**dadurch gekennzeichnet,**
**daß** der Sensor als induktiver Abstandssensor ausgebildet ist, der aus einem fest mit dem Fußhebel verbundenen Metallteil (4) und einem auf dieses gerichteten stationären Spulenteil (3) besteht,
**daß** das Metallteil (4) mit freiem Abstand außerhalb des Spulenteils (3) in dessen externen Wirkbereich angeordnet ist und
**daß** der Wirkabstand des Metallteils (4) und des Spulenteils (3) in Abhängigkeit von der Stellung des Fußhebels veränderbar ist.

2. Pedaleinrichtung nach Anspruch 1,
**dadurch gekennzeichnet,**
**daß** das Metallteil (4) aus magnetisch wechselwirkenden Material gebildet ist.

3. Pedaleinrichtung nach Anspruch 1 oder 2,
**dadurch gekennzeichnet,**
**daß** das Spulenteil (3) an einem stationären Teil des Pedalraums befestigt ist.

4. Pedaleinrichtung nach Anspruch 1 oder 2,
**dadurch gekennzeichnet ,**
**daß** das Metallteil (4) einstückig mit dem metallischen Fußhebel (1) verbunden ist.

5. Pedaleinrichtung nach Anspruch 3 oder 4,
**dadurch gekennzeichnet ,**
**daß** das Metallteil (4) als ein an einem elektromagnetisch neutralen Träger des Fußhebels (1) gelagertes separates Sensorelement ausgebildet ist.

6. Pedaleinrichtung nach Anspruch 5,
**dadurch gekennzeichnet,**
**daß** der elektromagnetisch neutrale Fußhebel (1) aus glasfaserverstärktem Kunststoff besteht.

7. Pedaleinrichtung nach Anspruch 4, 5 oder 6,
**dadurch gekennzeichnet,**
**daß** das Metallteil (4) auf einer dem Bedienbereich des Fußhebels (1) gegenüberliegenden Seite der Pedalachse (2) zwischen dieser und dem Spulenteil (3) angeordnet ist und
**daß** eine dem Spulenteil (3) zugewandte Seite des Metallteils (4) eine zum Spulenteil (3) weisende z.B. nockenartige Kontur aufweist, die exzentrisch zu einer Pedalachse (2) des Fußhebels (1) verläuft.

8. Pedaleinrichtung nach einem der vorhergehenden Ansprüche,
**dadurch gekennzeichnet,**
**daß** die elektrischen Meßwerte des Spulenteils (3) mittels einer elektronischen Umsetzeinrichtung in von der Pedalstellung abhängige Ausgangssignale umwandelbar sind.

9. Pedaleinrichtung nach Anspruch 8,
**dadurch gekennzeichnet,**
**daß** das Spulenteil (3) und die Umsetzeinrichtung an einem gemeinsamen Trägerteil fixiert sind.

10. Pedaleinrichtung nach einem der vorhergehenden Ansprüche,
**dadurch gekennzeichnet,**
**daß** zwei Spulenteile (3) und zwei gegenläufig wirkende Metallteile (4) für jeweils eine der Spulen vorgesehen sind.

11. Pedaleinrichtung nach Anspruch 10,
**dadurch gekennzeichnet,**
**daß** die stationären Spulen einander benachbart angeordnet sind und daß die beiden um die Pedalachse (2) kippbaren Metallteile (4) schmetterlingsartig zwischen der Pedalachse (2) und den Spulenteilen (3) angeordnet sind.

## Claims

1. A pedal system for motor vehicles having a pedal (1) and a sensor recording the path of the pedal (1),
**characterised in that** the sensor is constructed as an inductive distance sensor, which consists of a metal part (4) securely connected to the pedal and a stationary coil part (3) which is directed thereon,
**in that** the metal part (4) is disposed with a free spacing outside the coil part (3) in its outer effective region
and **in that** the effective spacing of the metal part (4) and the coil part (3) can be altered as a function of the position of the foot lever.

2. A pedal system according to Claim 1,
**characterised in that** the metal part (4) is made from magnetically interacting material.

3. A pedal system according to Claim 1 or 2,
**characterised in that** the coil part (3) is fixed to a stationary part of the pedal area.

4. A pedal system according to Claim 1 or 2,
**characterised in that** the metal part (4) is connected in one piece to the metallic pedal (1).

5. A pedal system according to Claim 3 or 4,
**characterised in that** the metal part (4) is constructed as a separate sensor element mounted on an electromagnetically neutral support of the pedal (1).

6. A pedal system according to Claim 5,
**characterised in that** the electromagnetically neutral pedal (1) is made from glass-fibre-reinforced plastic.

7. A pedal system according to Claim 4, 5 or 6,
**characterised in that** the metal part (4) is disposed on a side of the pedal axis (2) opposite the operating region of the pedal (1) between said pedal axis and the coil part (3),
and **in that** a side of the metal part (4) closer to the coil part (3) comprises a contour, e.g. a cam-type contour, pointing to the coil part (3), which extends eccentrically to a pedal axis (2) of the pedal (1).

8. A pedal system according to one of the preceding Claims,
**characterised in that** the electric measured values of the coil part (3) can be converted by means of an electronic converter into output signals dependent on the pedal position.

9. A pedal system according to Claim 8,
**characterised in that** the coil part (3) and the converter are fixed to a common support part.

10. A pedal system according to one of the preceding Claims,
**characterised in that** two coil parts (3) and two metal parts (4) acting in opposite directions are provided for one of the coils in each case.

11. A pedal system according to Claim 10,
**characterised in that** the stationary coils are disposed adjacent to one another,
and **in that** the two metal parts (4) which can be tilted around the pedal axis (2) are disposed in butterfly-like fashion between the pedal axis (2) and the coil parts (3).

## Revendications

1. Système de pédale pour véhicules automobiles, comprenant une pédale et un capteur mesurant la course de la pédale (1), **caractérisé par le fait que** le capteur est conformé en capteur de distance inductif avec un élément métallique (4) solidaire de la pédale et un élément formant bobine (3) stationnaire tourné vers ledit élément métallique et **par le fait que** la distance utile entre l'élément métallique (4) et l'élément formant bobine (3) peut varier en fonction de la position de la pédale.

2. Système de pédale selon la revendication 1, **caractérisé par le fait que** l'élément métallique (4) est formé de matériau interactif magnétiquement.

3. Système de pédale selon la revendication 1 ou 2, **caractérisé par le fait que** l'élément formant bobine (3) est fixé à un élément stationnaire de l'espace à pédales.

4. Système de pédale selon la revendication 1 ou 2, **caractérisé par le fait que** l'élément métallique (4) est réalisé d'une pièce avec la pédale (1) métallique.

5. Système de pédale selon la revendication 3 ou 4, **caractérisé par le fait que** l'élément métallique (4) est réalisé sous forme d'élément de capteur séparé monté sur un support électromagnétiquement neutre.

6. Système de pédale selon la revendication 5, **caractérisé par le fait que** la pédale (1) électromagnétiquement neutre est en matière plastique armée de fibres de verre.

7. Système de pédale selon la revendication 4, 5 ou 6, **caractérisé par le fait que** l'élément métallique (4) est disposé sur un côté de l'axe de pédale (2) opposé à la partie d'action sur la pédale (1), entre cette dernière et l'élément formant bobine (3) et **par le fait qu'**une face de l'élément métallique (4) tournée vers l'élément formant bobine (3) présente un profil par exemple en forme de came dirigé vers l'élément formant bobine (3), qui est excentré par rapport à un axe de pédale (2) de la pédale (1).

8. Système de pédale selon une des revendications précédentes, **caractérisé par le fait que** les valeurs de mesure électriques de l'élément formant bobine (3) sont converties en signaux de sortie dépendant de la position de la pédale à l'aide d'un dispositif convertisseur électronique.

9. Système de pédale selon la revendication 8, **caractérisé par le fait que** l'élément formant bobine (3) et le dispositif convertisseur sont fixés à un élément de support commun.

10. Système de pédale selon une des revendications précédentes, **caractérisé par le fait qu'**il est prévu deux éléments formant bobines (3) et deux éléments métalliques (4) agissant en opposition pour chaque fois une des bobines.

11. Système de pédale selon la revendication 10, **caractérisé par le fait que** les bobines stationnaires sont disposées à proximité l'une de l'autre et **par le fait que** les deux éléments métalliques oscillant autour de l'axe de pédale (2) sont disposés à la manière de paillons entre l'axe de pédale (2) et les éléments formant bobine (3).
